# EUROPÄISCHE PATENTANMELDUNG

(11) **EP 4 001 334 A1**
(43) Veröffentlichungstag der Anmeldung: **25.05.2022**
(21) Anmeldenummer: 20207733.5
(22) Anmeldetag: 16.11.2020
(51) Int. Cl.: C08G 18/42, C08G 18/62, C08G 18/79, C08G 18/24, C09D 175/04, C09D 175/06

(54) **VERWENDUNG SPEZIELLER KATALYSATOREN FÜR DIE HERSTELLUNG VON POLYURETHANBESCHICHTUNGEN**

(71) Anmelder: Covestro Deutschland AG, 51373 Leverkusen (DE)
(72) Erfinder: RICHTER, Frank, 51373 Leverkusen (DE); JURKSCHAT, Klaus, 44379 Dortmund (DE); IOVKOVA-BERENDS, Ljuba, 44225 Dortmund (DE); SIEGEMUND, Sven, 51399 Burscheid (DE)
(74) Vertreter: Levpat

(57) **Zusammenfassung**

Die Erfindung betrifft die Verwendung spezieller Katalysatoren zur Herstellung von Polyisocyanat-Polyadditionsprodukten, insbesondere für den Beschichtungsbereich.

## Beschreibung

Die vorliegende Erfindung betrifft spezielle Katalysatoren und deren Verwendung zur Herstellung von Polyisocyanat-Polyadditionsprodukten, insbesondere für den Beschichtungsbereich.

Polyurethanbeschichtungen sind seit langem bekannt und werden in vielen Bereichen eingesetzt. Sie werden in der Regel aus einer Polyisocyanat- und einer Hydroxylkomponente durch Vermischen unmittelbar vor der Applikation hergestellt (2-Komponenten-(2K)-Technologie). Für lichtechte Beschichtungen werden in der Regel Polyisocyanatkomponenten auf Basis aliphatischer Polyisocyanate eingesetzt, die im Vergleich zu Produkten mit aromatisch gebundenen Isocyanatgruppen deutlich langsamer mit der Hydroxylkomponente in Reaktion treten. In den meisten Fällen muss daher die Reaktion katalysiert werden. Zusätzlich wird falls möglich zur weiteren Beschleunigung der Reaktion erwärmt. Als Katalysatoren haben sich dabei organische Zinnverbindungen, insbes. Dibutylzinndilaurat (DBTL), bewährt. Diese haben den generellen Nachteil eines ungünstigen ökologischen Profils, was u. a. bereits dazu geführt hat, die Stoffklasse der Organozinnverbindungen aus Schiffsanstrichstoffen, denen sie als Biozid beigemengt wurden, vollständig zu verbannen.

Ein genereller Nachteil der 2K-Technologie ist es, dass die Reaktion der NCO- mit den OH-Gruppen bereits bei Zimmertemperatur langsam abläuft, was dazu führt, dass für die Verarbeitung der fertig formulierten Mischung eines derartigen 2K-Systems nur ein zeitlich enges Verarbeitungsfenster zur Verfügung steht, so genannte Topfzeit, welches durch die Anwesenheit des Katalysators weiter verkürzt wird.

Es hat deshalb nicht an Versuchen gefehlt, Katalysatoren zu entwickeln, die die Vernetzungsreaktion bei der Herstellung der 2K-Mischung kaum, nach Applikation dieser aber deutlich beschleunigen, so genannte latente Katalysatoren.

Eine besonders aussichtsreiche Technologie ist die thermolatente Katalyse (TLK) unter Verwendung von anorganischen Zinnverbindungen, wie sie beispielsweise in der WO 2011/051247 A1 beschrieben ist.

Ein Nachteil der im Stand der Technik genannten TLK-Systeme ist der recht hohe Katalysatorbedarf.

Aufgabe der vorliegenden Erfindung war es daher, Katalysator-Systeme, insbesondere TLK-Systeme, zur Verfügung zu stellen, die bei ansonsten unverändertem oder sogar verbessertem Eigenschaftsprofil, insbesondere lange Topfzeit und ausreichende Härte der erzeugten Beschichtung, mit deutlich geringerer Katalysatorbeladung auskommen. Selbstverständlich sollen diese verbesserten Katalysator-Systeme ebenfalls frei von toxischen Inhaltsstoffen, beispielsweise Cadmium, Quecksilber, Blei und/oder Organozinnverbindungen, sein. Als Organozinnverbindungen werden definitionsgemäß Spezies mit mindestens einer Sn-C-Bindung verstanden.

Diese Aufgabe konnte überraschenderweise durch den Einsatz spezieller anorganischer Sn(IV)-Katalysatoren gelöst werden.

Die vorliegende Erfindung betrifft daher den erfindungsgemäßen Katalysator der allgemeinen Formel (I) 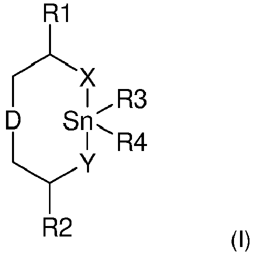 worin R1, R2, R3, R4, D, X und Y die folgenden Bedeutungen haben:
- R1, R2: unabhängig voneinander gesättigte oder ungesättigte, lineare oder verzweigte, aliphatische, cycloaliphatische, oder gegebenenfalls substituierte oder araliphatische, Reste mit 1 bis 20 Kohlenstoffatomen, die gegebenenfalls Heteroatome aus der Reihe Sauerstoff, Schwefel und/oder Stickstoff enthalten können, und von denen mindestens einer in beta-Stellung zu X bzw. Y mindestens ein Fluoratom aufweisen,
- R3, R4: unabhängig voneinander Gruppe ausgewählt aus -OH, -SH, -OR5, -Hal,-OC(=O)R6, -SR7, -OC(=S)R8, -OS(=O)₂OR9, -OS(=O)₂R10 oder -NR11R12,
wobei R5 bis R12 unabhängig voneinander für gesättigte oder ungesättigte, lineare oder verzweigte, aliphatische oder cycloaliphatische oder gegebenenfalls substituierte, aromatische oder araliphatische Reste mit 1 bis 20 Kohlenstoffatomen, die gegebenenfalls Heteroatome aus der Reihe Sauerstoff, Schwefel, Stickstoff enthalten können, oder für Wasserstoff stehen,
oder
R3 und R4 bilden zusammen eine Gruppe der allgemeinen Formel (II)

-X-CH(R1)-CH₂-D-CH₂-CH(R2)-Y- (II),

in der R1, R2, D, X und Y unabhängig voneinander die hier genannten Bedeutungen haben,
- X, Y: unabhängig voneinander Gruppe ausgewählt aus -O-, -S-, -OC(=O), -OC(=S)-, -SC(=O)-, -SC(=S)-, -OS(=O)₂O-, -OS(=O)₂- oder -N(R13)-,
wobei R13 für einen gesättigten oder ungesättigten, linearen oder verzweigten, aliphatischen oder cycloaliphatischen oder einen gegebenenfalls substituierten, aromatischen oder araliphatischen Rest mit 1 bis 20 Kohlenstoffatomen, der gegebenenfalls Heteroatome aus der Reihe Sauerstoff, Schwefel, Stickstoff enthalten kann, oder für Wasserstoff steht,
- D: Gruppe ausgewählt aus -O-, -S- oder -N(R14)-,
wobei R14 für einen gesättigten oder ungesättigten, linearen oder verzweigten, aliphatischen oder cycloaliphatischen oder einen gegebenenfalls substituierten, aromatischen oder araliphatischen Rest mit 1 bis 20 Kohlenstoffatomen, der gegebenenfalls Heteroatome aus der Reihe Sauerstoff, Schwefel, Stickstoff enthalten kann, oder für Wasserstoff steht
oder R14 steht für einen Rest der allgemeinen Formel (III) 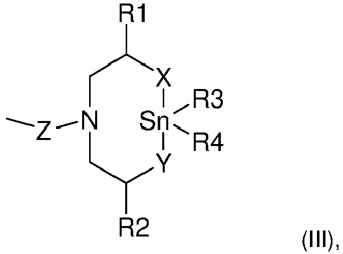 wobei Z eine Einfachbindung oder eine gesättigte oder ungesättigte, bevorzugt gesättigte, Alkylen-Gruppe mit 1 bis 12 Kohlenstoffatomen oder eine Arylen-Gruppe mit 6 bis 24 Kohlenstoffatomen, beispielsweise Phenylen oder Naphtylen, bedeutet.

Der erfindungsgemäße Katalysator ist bevorzugt ein thermolatenter Katalysator, d.h. dass der erfindungsgemäße Katalysator seine Aktivität bevorzugt durch Erhöhung der Temperatur, beispielsweise auf 40 bis 100 °C, entwickelt.

R1 und R2 sind unabhängig voneinander gesättigte oder ungesättigte, lineare oder verzweigte, aliphatische, cycloaliphatische, oder gegebenenfalls substituierte oder araliphatische, Reste mit 1 bis 20 Kohlenstoffatomen, die gegebenenfalls Heteroatome aus der Reihe Sauerstoff, Schwefel und/oder Stickstoff enthalten können, und von denen mindestens einer in beta-Stellung zu X bzw. Y mindestens ein Fluoratom aufweisen.

Im Rahmen der vorliegenden Erfindung ist es wesentlich, dass mindestens einer der Reste R1 und R2, bevorzugt beide Reste R1 und R2, in beta-Stellung zu den Gruppierungen X und/oder Y, mindestens ein Fluoratom aufweisen. In einer bevorzugten Ausführungsform der vorliegenden Erfindung weist mindestens einer der Reste R1 und R2, bevorzugt beide Reste R1 und R2, in beta-Stellung zu den Gruppierungen X und/oder Y, zwei Fluoratome auf.

Bevorzugt sind R1 und R2 unabhängig voneinander gesättigte oder ungesättigte, lineare oder verzweigte, aliphatische, cycloaliphatische Reste mit 1 bis 20, bevorzugt 1 bis 12, besonders bevorzugt 1 bis 8, Kohlenstoffatomen, und von denen mindestens einer in beta-Stellung zu X bzw. Y mindestens ein Fluoratom aufweist.

Bevorzugt entsprechen die Reste R1 und R2 daher unabhängig voneinander der allgemeinen Formel (IV)

-CFRR' (IV),

wobei R und R' unabhängig voneinander ausgewählt sind aus Fluor, Wasserstoff, gesättigten oder ungesättigten, linearen oder verzweigten, aliphatischen, cycloaliphatischen, oder gegebenenfalls substituierten, aromatischen oder araliphatischen, Resten mit 1 bis 19 Kohlenstoffatomen, die gegebenenfalls Heteroatome aus der Reihe Sauerstoff, Schwefel und/oder Stickstoff enthalten können.

Bevorzugt sind R und R' unabhängig voneinander ausgewählt aus Fluor, Wasserstoff, gesättigten oder ungesättigten, linearen oder verzweigten, aliphatischen, cycloaliphatischen Resten mit 1 bis 19, bevorzugt 1 bis 11, besonders bevorzugt 1 bis 7, Kohlenstoffatomen.

Ganz besonders bevorzugte Bedeutungen für R1 und/oder R2 sind -CH₂F, -CHF₂, - CF₃, -(CF₂)ₙF, -(C₂F₄O)ₙCF₃, -(C₂F₄O)ₙC₂F₅, -(C₃F₆O)ₙCF₃, -(C₃F₆O)ₙC₃F₇ mit n jeweils ganze Zahl von 2 bis 18.

Erfindungsgemäß bevorzugt sind in der Verbindung der allgemeinen Formel (I) R1 und R2 identisch.

Bevorzugt handelt es sich bei R3 und R4 unabhängig voneinander um -OH, -SH, -OR5, -Hal, - OC(=O)R6, wobei die Reste R5 und R6 unabhängig voneinander gesättigte, lineare oder verzweigte, aliphatische oder cycloaliphatische Reste mit 1 bis 20, bevorzugt 1 bis 12, besonders bevorzugt 1 bis 8, Kohlenstoffatomen sind.

Besonders bevorzugt handelt es sich bei R3 und R4 unabhängig voneinander um Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat, wobei Pr, Bu, Hex und Oct für alle isomeren Propyl-, Butyl-, Hexyl- sowie Octylreste stehen.

Ganz besonders bevorzugt stehen R3 und R4 unabhängig voneinander für Cl-, MeO-, EtO-, PrO-, BuO-, HexO-, OctO-, PhO-, Hexanoat, Laurat, oder Benzoat, wobei Pr, Bu, Hex und Oct für alle isomeren Propyl-, Butyl-, Hexyl- sowie Octylreste stehen.

In einer besonders bevorzugten Ausführungsform bilden R3 und R4 zusammen eine Gruppe der allgemeinen Formel (II)

-X-CH(R1)-CH₂-D-CH₂-CH(R2)-Y- (II),

in der R1, R2, D, X und Y unabhängig voneinander die bezüglich der allgemeinen Formel (I) genannten Bedeutungen haben.

Weiter bevorzugt haben R1, R2, D, X und Y in der allgemeinen Formel (II) die gleichen, d.h. die identischen, Bedeutungen wie sie auch in der allgemeinen Formel (I) haben. Somit sind erfindungsgemäß symmetrisch aufgebaute Verbindungen der allgemeinen Formel (I) besonders bevorzugt.

Bevorzugt handelt es sich bei D um -N(R14)-, wobei R14 für einen gesättigten oder ungesättigten, linearen oder verzweigten, aliphatischen oder cycloaliphatischen oder einen gegebenenfalls substituierten, aromatischen oder araliphatischen Rest mit 1 bis 20 Kohlenstoffatomen, der gegebenenfalls Heteroatome aus der Reihe Sauerstoff, Schwefel, Stickstoff enthalten kann, oder für Wasserstoff steht.

Besonders bevorzugt handelt es sich bei R14 um Wasserstoff oder einen Alkyl-, Aralkyl-, Alkaryl- oder Arylrest mit 1 bis 20, bevorzugt 1 bis 12, besonders bevorzugt 1 bis 8, Kohlenstoffatomen, ganz besonders bevorzugt um Wasserstoff oder einen Methyl-, Ethyl-, Propyl-, Butyl-, Pentyl-, Hexyl-, Heptyl- oder Octyl-Rest, wobei Propyl-, Butyl-, Pentyl-, Hexyl-, Heptyl- und Octyl für alle isomeren Propyl-, Butyl-, Pentyl-, Hexyl-, Heptyl- sowie Octylreste stehen, um Ph- oder CH₃Ph-.

Bevorzugt handelt es sich bei X und Y jeweils unabhängig voneinander um -NR13-, -S-, -SC(=S)-, -SC(=O)-, -OC(=S)-, -O-, oder -OC(=O)-, besonders bevorzugt um -O-oder -OC(=O)-.

Bevorzugt handelt es sich bei R13 um Wasserstoff oder einen Alkyl-, Aralkyl-, Alkaryl- oder Arylrest mit 1 bis 20, bevorzugt 1 bis 12, besonders bevorzugt 1 bis 8, Kohlenstoffatomen, ganz besonders bevorzugt um Wasserstoff oder einen Methyl-, Ethyl-, Propyl-, Butyl-, Pentyl-, Hexyl- Heptyl- oder Octyl-Rest, wobei Propyl-, Butyl-, Pentyl-, Hexyl-, Heptyl- und Octyl für alle isomeren Propyl-, Butyl-, Pentyl-, Hexyl-, Heptyl- sowie Octylreste stehen.

Die erfindungsgemäßen Katalysatoren der allgemeinen Formel (I) neigen zur Oligomerisierung, so dass erfindungsgemäß häufig mehrkernige Verbindungen der allgemeinen Formel (I) oder Gemische aus ein- und mehrkernigen Verbindungen der allgemeinen Formel (I) vorliegen können.

In den mehrkernigen Verbindungen der allgemeinen Formel (I) sind die vorliegenden Zinnatome bevorzugt über Sauerstoffatome und/oder Schwefelatome, so genannte Sauerstoff- bzw. Schwefelbrücken, miteinander verbunden. Typische oligomere Komplexe, d.h. mehrkernige Zinnverbindungen, entstehen z.B. durch Kondensation der Zinnatome über Sauerstoff und/oder Schwefel, siehe z.B. die allgemeinen Formeln (Va) und (Vb) 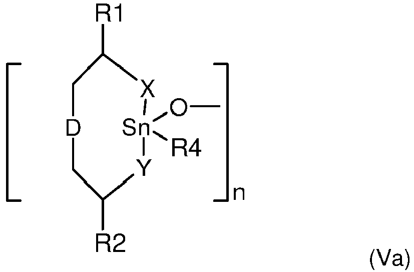 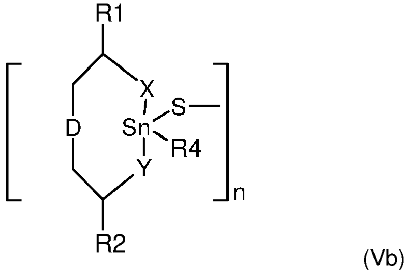 mit n > 1 und den oben angegebenen Bedeutungen für D, X, Y, R1, R2 und R4. Bei niedrigen Oligomerisierungsgraden findet man häufig cyclische, bei höheren Oligomerisierungsgraden lineare, Oligomere mit OH- bzw. SH-Endgruppen.

In den Fällen, in denen der erfindungsgemäße Katalysator Liganden mit freien OH- und/oder NH-Resten aufweist, kann dieser bei Einsatz in einer Polyisocyanat-Polyadditionsreaktion in das Produkt eingebaut werden. Besonderer Vorteil dieser einbaubaren Katalysatoren ist ihr stark reduziertes Fogging-Verhalten, was besonders beim Einsatz von Polyurethanbeschichtungen im Automobilinnenraum wichtig ist. Die vorliegende Erfindung betrifft daher bevorzugt den erfindungsgemäßen Katalysator, wobei dieser mindestens eine freie OH- und/oder NH-Rest aufweist.

Die vorliegende Erfindung betrifft auch ein Verfahren zur Herstellung der Katalysatoren der allgemeinen Formel (I), umfassend mindestens die Schritte
(A) Bereitstellen mindestens einer Verbindung der allgemeinen Formel (VI)

   HY-CHR2-CH₂-D-CH₂-CHR1-XH (VI)

   wobei R1, R2, D, X und Y die folgenden Bedeutungen haben
   - R1, R2: unabhängig voneinander gesättigte oder ungesättigte, lineare oder verzweigte, aliphatische, cycloaliphatische, oder gegebenenfalls substituierte oder araliphatische, Reste mit 1 bis 20 Kohlenstoffatomen, die gegebenenfalls Heteroatome aus der Reihe Sauerstoff, Schwefel und/oder Stickstoff enthalten können, und von denen mindestens einer in beta-Stellung zu X bzw. Y mindestens ein Fluoratom aufweisen,
   - X, Y: unabhängig voneinander Gruppe ausgewählt aus -O-, -S-, -OC(=O), -OC(=S)-, -SC(=O)-, -SC(=S)-, -OS(=O)₂O-, -OS(=O)₂- oder -N(R13)-,
   wobei R13 für einen gesättigten oder ungesättigten, linearen oder verzweigten, aliphatischen oder cycloaliphatischen oder einen gegebenenfalls substituierten, aromatischen oder araliphatischen Rest mit 1 bis 20 Kohlenstoffatomen, der gegebenenfalls Heteroatome aus der Reihe Sauerstoff, Schwefel, Stickstoff enthalten kann, oder für Wasserstoff steht,
   - D: Gruppe ausgewählt aus -O-, -S- oder -N(R14)-,
   wobei R14 für einen gesättigten oder ungesättigten, linearen oder verzweigten, aliphatischen oder cycloaliphatischen oder einen gegebenenfalls substituierten, aromatischen oder araliphatischen Rest mit 1 bis 20 Kohlenstoffatomen, der gegebenenfalls Heteroatome aus der Reihe Sauerstoff, Schwefel, Stickstoff enthalten kann, oder für Wasserstoff steht,
(B) Inkontaktbringen der mindestens einen Verbindung der allgemeinen Formel (VI) mit mindestens einer Zinn-enthaltenden Verbindung, um den Katalysator der allgemeinen Formel (I) zu erhalten.

Allgemeine und bevorzugte Bedeutungen der allgemeinen Formeln (I) und (VI) sind bereits weiter oben beschrieben und gelten hier entsprechend.

Die einzelnen Schritte des erfindungsgemäßen Verfahrens zur Herstellung des erfindungsgemäßen Katalysators werden im Folgenden beschrieben.

Schritt (A) des erfindungsgemäßen Verfahrens umfasst das (A) Bereitstellen mindestens einer Verbindung der allgemeinen Formel (VI). Im Rahmen der vorliegenden Erfindung bedeutet "Bereitstellen", dass die mindestens eine Verbindung der allgemeinen Formel (VI) in einem entsprechenden Reaktor, gegebenenfalls in einem Lösemittel, bei einer geeigneten Temperatur und ggf. zusammen mit weiteren Komponenten vorgelegt wird.

Die Verbindungen der allgemeinen Formel (VI) sind dem Fachmann an sich bekannt und über übliche Synthesewege zugänglich. Für den bevorzugten Fall, dass es sich bei den Verbindungen der allgemeinen Formel (VI) um Alkanolamine handelt, sind diese beispielsweise zugänglich, indem ein entsprechendes, die Gruppen R1 und R2 tragendes Olefin nach dem Fachmann bekannten Verfahren epoxidiert wird. Anschließend wird das so erhaltene Epoxid mit entsprechenden Verbindungen RNH2 umgesetzt. Siehe dazu beispielsweise C. Coudures, R. Pastor et A. Chabon, J. Fluor. Chem. 24 (1984), Seiten 93 bis 104.

Für Schritt (A) geeignete Reaktoren sind beispielsweise Rührreaktoren mit entsprechenden Vorrichtungen für die Zugabe von Reaktionskomponenten etc.

Für Schritt (A) geeignete Lösemittel sind beispielsweise ausgewählt aus der Gruppe bestehend aus Alkoholen, bevorzugt Methanol, Ethanol, Propanol, insbesondere iso-Propanol, oder Mischungen davon, Ethern, bevorzugt Diethylether, Tetrahydrofuran, tert-Butyl-methylether oder Mischungen davon, halogenierten Lösungsmitteln, bevorzugt Dichlormethan, Chlorform oder Mischungen davon, aromatischen Lösungsmitteln, bevorzugt Toluol, und Mischungen davon.

Schritt (A) des erfindungsgemäßen Verfahrens erfolgt bevorzugt bei einer Temperatur von -30 bis 150 °C, besonders bevorzugt -10 bis 100 °C, ganz besonders bevorzugt bei Zimmertemperatur.

In einer bevorzugten Ausführungsform des erfindungsgemäßen Verfahrens wird Schritt (A) in inerter Atmosphäre, beispielsweise unter Stickstoff, durchgeführt.

Zusätzlich zu der mindestens einen Verbindung der allgemeinen Formel (VI) können gegebenenfalls weitere Komponenten vorgelegt werden. Diese sind beispielsweise ausgewählt aus Hilfsbasen, z.B. Alkoholate, und Mischungen enthaltend diese. Besonders bevorzugt umfasst das erfindungsgemäße Verfahren nur die Umsetzung der mindestens einen Verbindung der allgemeinen Formel (VI) mit einer Zinn-enthaltenden Verbindung, um den Katalysator der allgemeinen Formel (I) zu erhalten.

Schritt (B) des erfindungsgemäßen Verfahrens umfasst das Inkontaktbringen der mindestens einen Verbindung der allgemeinen Formel (VI) mit mindestens einer Zinn-enthaltenden Verbindung, um den Katalysator der allgemeinen Formel (I) zu erhalten.

Für den erfindungsgemäßen Fall, dass in der allgemeinen Formel (I) R3 und R4 so gestaltet sind, dass sie sich von dem am Zinn-Atom vorhandenen Zyklus unterscheiden, können R3 und R4 bereits in der Zinn-enthaltenden Verbindung vorliegen, beispielsweise als R3R4SnCl₂, wobei auch andere Abgangsgruppen als Cl vorliegen können. Des Weiteren kann als Zinn-enthaltende Verbindung SnCl₄ eingesetzt werden, welches mit nur ca. einem Äquivalent der Verbindung der allgemeinen Formel (VI) umgesetzt wird, und die beiden verbleibenden Cl-Atome mit entsprechenden Resten R3 und R4 anschließend substituiert werden. Erfindungsgemäß geeignete Zinn-enthaltende Verbindungen sind dabei im Allgemeinen Zinn(IV)-enthaltende Verbindungen.

In einer weiteren Ausführungsform des erfindungsgemäßen Verfahrens können in Schritt (B) Sn(II)-Verbindungen eingesetzt werden. In diesem Fall schließt sich an Schritt (B) des erfindungsgemäßen Verfahrens eine oxidative Behandlung des erhaltenen Sn(II)-Komplexes an. Geeignete Verfahren dazu sind dem Fachmann an sich bekannt.

Erfindungsgemäß bevorzugt werden Zinn-enthaltende Verbindungen eingesetzt, die eine Verbindung der allgemeinen Formel (I) liefern, in denen das Zinnatom ein Brückenkopfatom einer spirozyklischen Verbindung ist. Besonderes bevorzugte Zinn-enthaltende, insbesondere Zinn(IV)-enthaltende, Verbindungen sind daher ausgewählt aus der Gruppe bestehend aus Zinntetra-alkoxiden, beispielsweise Zinntetra-butoxid, insbesondere Zinntetra-tert.-butoxid, Zinntetra-halogeniden, beispielsweise Zinntetra-chlorid, und Mischungen davon.

Besonders bevorzugt wird erfindungsgemäß Zinntetra-tert.-butoxid oder Zinntetrachlorid eingesetzt.

In einer bevorzugten Ausführungsform des erfindungsgemäßen Verfahrens wird Schritt (B) in inerter Atmosphäre, beispielsweise unter Stickstoff, durchgeführt.

In einer besonders bevorzugten Ausführungsform erfolgt Schritt (B) des erfindungsgemäßen Verfahrens, indem die mindestens eine Zinn-enthaltende Verbindung in einem entsprechenden Reaktor vorgelegt und die mindestens eine Verbindung der allgemeinen Formel (VI) in verdünnter Form hinzugegeben wird.

Das molare Verhältnis der Verbindung der allgemeinen Formel (VI) und der mindestens einen Zinn-enthaltenden Verbindung beträgt dabei im Allgemeinen 0,8:1 bis 2,5:1, bevorzugt 1:1 bis 2,2,:1, besonders bevorzugt 1:1 bis 2,1: 1.

Für den erfindungsgemäßen Fall, dass in der allgemeinen Formel (I) R3 und R4 zusammen eine Gruppe der allgemeinen Formel (II)

-X-CH(R1)-CH₂-D-CH₂-CH(R2)-Y- (II),

in der R1, R2, D, X und Y unabhängig voneinander die hier genannten Bedeutungen haben, bilden, wird die Verbindung der allgemeinen Formel (VI) bevorzugt in einer entsprechenden Menge zugegeben, beispielsweise in einem Verhältnis der Verbindung der allgemeinen

Formel (VI) und der mindestens einen Zinn-enthaltenden Verbindung von 1:1,8 bis 1:2,2, bevorzugt 1:2.

Für den erfindungsgemäßen Fall, dass in der allgemeinen Formel (I) R3 und R4 andere Bedeutungen haben als dass sie zusammen eine Gruppe der allgemeinen Formel (II)

-X-CH(R1)-CH₂-D-CH₂-CH(R2)-Y- (II),

in der R1, R2, D, X und Y unabhängig voneinander die hier genannten Bedeutungen haben, bilden, wird die Verbindung der allgemeinen Formel (VI) bevorzugt in einer entsprechenden Menge zugegeben, beispielsweise in einem Verhältnis der Verbindung der allgemeinen Formel (VI) und der mindestens einen Zinn-enthaltenden Verbindung von ca. 1:1. In diesem Fall können die Reste R3 und R4 entweder direkt durch die Zinn-enthaltende Verbindung eingeführt werden, d.h. als Zinn-enthaltende Verbindung wird beispielsweise Cl₂ZnR3R4 eingesetzt, oder nach Umsetzung der Zinn-enthaltenden Verbindung, insbesondere Zinntetrachlorid oder Zinntetra-tert.-butoxid, mit der Verbindung der allgemeinen Formel (VI) werden die beiden verbliebenen Chloratome bzw. tert.-Butoxid-Gruppen mit entsprechenden R3- und R4-enthaltenden Verbindungen umgesetzt. Entsprechende R3- und R4-enthaltende Verbindungen sind beispielsweise ausgewählt aus entsprechenden Verbindungen, die neben den Resten R3 und R4 entsprechende, dem Fachmann an sich bekannte, Abgangsgruppen aufweisen, beispielsweise OH-Gruppen, SH-Gruppen und/oder N(R)H-Gruppen.

Schritt (B) des erfindungsgemäßen Verfahrens erfolgt im Allgemeinen einer Temperatur von -30 bis 150 °C, besonders bevorzugt -10 bis 100 °C, ganz besonders bevorzugt bei der Siedetemperatur des eingesetzten Lösemittels.

Schritt (B) wird erfindungsgemäß so lange durchgeführt, bis die eingesetzten Edukte möglichst vollständig umgesetzt sind. Nach Schritt (B) kann die erhaltene Reaktionslösung nach dem Fachmann bekannten Methoden aufgearbeitet werden, beispielsweise Filtration, destillative Abtrennung des Lösemittels, Kristallisation u.ä.

Die vorliegende Erfindung betrifft des Weiteren auch ein Polyisocyanat-Polyadditionsprodukt erhältlich aus
(a) mindestens einem aliphatischen, cycloaliphatischen, araliphatischen und/oder aromatischen Polyisocyanat,
(b) mindestens einer NCO-reaktiven Verbindung,
(c) mindestens einem erfindungsgemäßen Katalysator der allgemeinen Formel (I),
(d) gegebenenfalls weiteren von (c) verschiedenen Katalysatoren und/oder Aktivatoren,
(e) gegebenenfalls Füllstoffen, Pigmenten, Additiven, Verdickern, Entschäumern und/oder anderen Hilfs- und Zusatzstoffen.

Erfindungsgemäß bevorzugt sind die Polyisocyanat-Polyadditionsprodukte Polyurethane. Die einzelnen Komponenten des erfindungsgemäßen Polyisocyanat-Polyadditionsproduktes, insbesondere Polyurethane, werden im Folgenden detailliert beschrieben.

Die für die Herstellung von Polyisocyanat-Polyadditionsprodukten geeigneten aliphatischen, cycloaliphatischen, araliphatischen und/oder aromatischen Polyisocyanate (a) sind die dem Fachmann an sich bekannten organischen aliphatischen, cycloaliphatischen, araliphatischen und/oder aromatischen Polyisocyanate mit mindestens zwei Isocyanatgruppen pro Molekül sowie Gemische davon.

Beispiele für derartige Polyisocyanate sind Di- oder Triisocyanate, beispielsweise Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN), 4,4'-Methylen-bis(cyclohexylisocyanat) (H₁₂MDI), 3,5,5-Trimethyl-1-isocyanato-3-isocyanatomethylcyclohexan (Isophorondiisocyanat, IPDI), 1,3- sowie 1,4-Bis(isocyanatomethyl)cyclohexan (H₆XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktureinheiten.

Erfindungsgemäß bevorzugt werden Polyisocyanate auf Basis aliphatischer und cycloaliphatischer Diisocyanate eingesetzt.

Die Polyisocyanatkomponente (a) kann in einem geeigneten Lösemittel vorliegen. Geeignete Lösemittel sind solche, die eine ausreichende Löslichkeit der Polyisocyanatkomponente aufweisen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA) und Mischungen davon.

Die Isocyanatkomponente kann darüber hinaus übliche Hilfs- und Zusatzmittel, beispielsweise Rheologieverbesserer (zum Beispiel Ethylencarbonat, Propylencarbonat, dibasische Ester, Zitronensäureester), Stabilisatoren (zum Beispiel Broenstedt- und Lewis-Säuren, wie etwa Salzsäure, Phosphorsäure, Benzoylchlorid, Organomineralsäuren wie Dibutylphosphat, weiterhin Adipinsäure, Äpfelsäure, Bernsteinsäure, Traubensäure oder Zitronensäure), UV-Schutzmittel (zum Beispiel 2,6-Dibutyl-4-methylphenol), Hydrolyseschutzmittel (zum Beispiel sterisch gehinderte Carbodiimide), Emulgatoren sowie Katalysatoren (zum Beispiel Trialkylamine, Diazabicyclooctan, Zinndioctoat, Dibutylzinndilaurat, N-Alkylmorpholin, Blei-, Zink-, Zinn-, Calcium-, Magnesiumoctoat, die entsprechenden Naphthenate und p-Nitrophenolat und/oder auch Quecksilberphenylneodecanoat) und Füllstoffe (zum Beispiel Kreide), gegebenenfalls in das/den später zu bildende/n Polyurethan/Polyharnstoff einbaufähige Farbstoffe (die also über Zerewitinoff-aktive Wasserstoffatome verfügen) und/oder Farbpigmente enthalten.

Als NCO-reaktive Verbindungen (b) können bevorzugt alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole.

Polyetherpolyole sind in an sich bekannter Weise durch Alkoxylierung von geeigneten StarterMolekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, beispielsweise Ethylenglykol, Diethylenglykol, Neopentylglykol, Hexandiol, Butandiol, Propylenglykol, Glycerin, Trimethylolpropan, 1,4-Hydroxymethyl cyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch ringöffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, beispielsweise Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, beispielsweise Azoisobutyronitril (AIBN), oder aus der Gruppe der Peroxide, beispielsweise Di-tert.-butylperoxid.

Bevorzugt handelt es sich bei Komponente (b) um höhermolekulare Polyhydroxyverbindungen, beispielsweise mit einem Molekulargewicht von 500 bis 10.000 g/mol, bevorzugt 1.000 bis 10.000 g/mol.

Die Komponente (b) kann in einem geeigneten Lösemittel vorliegen. Geeignete Lösemittel sind solche, die eine ausreichende Löslichkeit der Komponente aufweisen. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA) und Mischungen davon. Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), aber auch niedermolekulare Diamine, wie zum Beispiel Polyasparaginsäureester, sein.

Um das erfindungsgemäße Polyisocyanat-Polyadditionsprodukt zu erhalten, wird als Komponente (c) mindestens ein erfindungsgemäßer Katalysator der allgemeinen Formel (I) eingesetzt.

Das bezüglich des erfindungsgemäßen Katalysators, insbesondere zu bevorzugten Ausführungsformen, Gesagte gilt hier entsprechend.

Der erfindungsgemäße Katalysator kann über die NCO-reaktive Verbindung (Polyol), in einem Lösungsmittel gelöst und/oder im Polyisocyanat vorgelöst der Reaktionsmischung zugegeben werden.

Die erfindungsgemäßen Polyisocyanat-Polyadditionsprodukte werden des Weiteren erhalten unter optionaler Verwendung der Komponente d), weiteren von c) verschiedenen Katalysatoren und/oder Aktivatoren, insbesondere Säuren, Amine, sterisch gehinderte Phenole, Phospite etc.. Diese sind dem Fachmann an sich bekannt und beispielsweise in der WO 2014/048879 A1 beschrieben.

Des Weiteren kann der erfindungsgemäße Katalysator mit weiteren aus dem Stand der Technik bekannten Katalysatoren/Aktivatoren kombiniert werden, beispielsweise können Titan-, Zirkonium-, Bismut-, Zinn(II)- und/oder Eisenhaltige Katalysatoren eingesetzt werden wie sie beispielsweise in WO 2005/058996 beschrieben werden.

Möglich ist auch eine Zugabe von Aminen oder Amidinen. Des Weiteren können bei der Polyisocyanat-Polyadditionsreaktion auch saure Verbindungen, beispielsweise 2-Ethylhexansäure oder Alkohole, zur Reaktionssteuerung zugegeben werden.

Die erfindungsgemäßen Polyisocyanat-Polyadditionsprodukte werden des Weiteren erhalten unter optionaler Verwendung der Komponente (e) Füllstoffe, Pigmente, Additive, Verdicker, Entschäumer und/oder andere Hilfs- und Zusatzstoffe.

Insbesondere als Komponente (e) geeignete Stoffe sind ausgewählt aus der Gruppe bestehend aus üblichen Rheologieverbesserern, Stabilisatoren, UV-Schutzmitteln, Hydrolyseschutzmittel, Emulgatoren, Füllstoffen, gegebenenfalls einbaufähigen Farbstoffen, d.h. solche Farbstoffe, die über Zerewitinoff-aktive Wasserstoffatome verfügen, Farbpigmente und Mischungen davon.

Bevorzugte Hilfs- und Zusatzmittel sind Treibmittel, Füllstoffe, Kreide, Ruß oder Zeolithe, Flammschutzmittel, Farbpasten, Wasser, Mikrobenschutzmittel, Fließverbesserer, Thixotropiermittel, Oberflächenmodifizierungsmittel und Verzögerer bei der Herstellung der Polyisocyanat- Polyadditionsprodukte. Weitere Hilfs- und Zusatzstoffe umfassen Entschäumer, Emulgatoren, Schaumstabilisatoren und Zellregler. Eine Übersicht ist in G. Oertel, Polyurethane Handbook, 2nd Edition, Carl Hanser Verlag, München, 1994, Kap. 3.4., enthalten.

Ein weiterer Gegenstand der vorliegenden Erfindung ist ein Verfahren zur Herstellung der erfindungsgemäßen Polyisocyanat-Polyadditionsprodukte wobei
(a) mindestens ein aliphatisches, cycloaliphatisches, araliphatisches und/oder aromatisches Polyisocyanat mit
(b) mindestens einer NCO-reaktiven Verbindung in Gegenwart
(c) mindestens eines erfindungsgemäßen Katalysators,
(d) gegebenenfalls weiteren von (c) verschiedenen Katalysatoren und/oder Aktivatoren und
(e) gegebenenfalls Füllstoffen, Pigmenten, Additiven, Verdickern, Entschäumern und/oder anderen Hilfs- und Zusatzstoffen,
umgesetzt wird.

Die Komponenten (a) bis (e) sind weiter oben detailliert beschrieben.

Das erfindungsgemäße Verfahren erfolgt bevorzugt durch Zusammengeben der genannten Komponenten bei Zimmertemperatur, bevorzugt unter Ausschluss von Luft und Wasser, beispielsweise unter einer trockenen Stickstoff-Atmosphäre.

Die erfindungsgemäßen Katalysatoren weisen eine im Vergleich zu Katalysatoren des Standes der Technik erhöhte Aktivität auf. Daher kann die Menge an erfindungsgemäßem Katalysator im Vergleich zum Stand der Technik bevorzugt gesenkt werden. In einer bevorzugten Ausführungsform beträgt daher das Verhältnis des Gewichts des Zinns aus Komponente (c) und des Gewichts der Komponente (a) weniger als 1000 ppm beträgt, wenn Komponente (a) ein aliphatisches Polyisocyanat ist und weniger als 50 ppm beträgt, wenn Komponente (a) ein aromatisches Polyisocyanat ist.

Das erfindungsgemäße Polyisocyanat-Polyadditionsprodukt kann besonders bevorzugt in einem Beschichtungsmittel eingesetzt werden.

Die vorliegende Erfindung betrifft daher des Weiteren ein Beschichtungsmittel enthaltend mindestens ein erfindungsgemäßes Polyisocyanat-Polyadditionsprodukt.

Das erfindungsgemäße System aus den oben genannten Komponenten kann im Allgemeinen durch jedes dem Fachmann bekannte Verfahren auf das zu beschichtende Substrat aufgebracht werden, beispielsweise in Lösung oder aus der Schmelze sowie bei Pulverlacken in fester Form mit Methoden wie Streichen, Rollen, Gießen, Spritzen, Tauchen, Wirbelschichtverfahren oder durch elektrostatische Sprühverfahren. Als Substrate eigenen sich beispielsweise Werkstoffe wie Metalle, Holz, Kunststoffe oder Keramiken.

Die vorliegende Erfindung betrifft auch eine Beschichtung erhältlich unter Verwendung des erfindungsgemäßen Beschichtungsmittels.

Des Weiteren betrifft die vorliegende Erfindung ein Substrat beschichtet mit einer erfindungsgemäßen Beschichtung.

Die Erfindung soll anhand der nachfolgenden Beispiele näher erläutert werden, ohne sie einzuschränken.

### Beispiele

Alle Prozentangaben sind, soweit nicht anders vermerkt, als Gewichtsprozent zu verstehen. NMR-Messungen wurden auf den Geräten Bruker DPX 400 bzw. DRX 700 an ca. 5%igen (¹H-, ¹⁹F-NMR) bzw. ca. 50%igen (¹³C-, ¹¹⁹Sn-NMR) Proben in trockenem C₆D₆, wenn nicht anders vermerkt, bei 400 bzw. 700 MHz Protonenfrequenz bzw. 100 bzw. 176 MHz (¹³C-NMR) durchgeführt. Als Referenz für die ppm-Skale diente Tetramethylsilan im NMR-Lösemittel (¹H NMR chemical shift 0 ppm). Alternativ wurde im NMR-Lösemittel anwesendes C₆D₅H als Referenzsignal (7,15 ppm, ¹H-NMR) bzw. das Lösemittelsignal selbst (mittleres Signal des 1:1:1 Tripletts bei 128,0 ppm in der ¹³C-NMR verwendet. ¹⁵N-NMR chemische Verschiebungen wurden indirekt mittels ¹H-¹⁵N-HMBC-Messungen ermittelt, wobei extern auf flüssigen Ammoniak referenziert wurde (0 ppm). Als Referenz für die ¹⁹F-NMR wurde CFCl₃ (extern) und als Referenz für die ¹¹⁹Sn-NMR Tetramethylzinn (extern) verwendet. Positive Vorzeichen bezeichnen Signale, die Tieffeld vom Standard erscheinen.

Dynamische Viskositäten wurden bei 23 °C mit dem MCR 501-Rheometer (Fa. Anton Paar) gemäß DIN EN ISO 3219:1994-10 bestimmt. Durch Messung bei unterschiedlichen Scherraten wurde sichergestellt, dass von newtonischem Fließverhalten ausgegangen werden kann. Angaben zur Scherrate können daher entfallen.

Der NCO-Gehalt wurde durch Titration gemäß DIN EN ISO 10283:2007-11 ermittelt.

Der Restmonomeren-Gehalt wurde gaschromatographisch nach DIN EN ISO 10283:2007-11 mit internem Standard bestimmt.

GC-MS wurde mit dem Agilent GC6890, ausgestattet mit einer MN 725825.30 Optima-5-MS-Accent Kapillarsäule (30 m, 0,25 mm Innendurchmesser, 0,5 µm Filmschichtdicke) und einem Massenspektrometer 5973 als Detektor mit Helium als Transportgas (Flussrate 2 ml/min) durchgeführt. Die Säulentemperatur betrug anfangs 60 °C (2 min) und wurde anschließend schrittweise mit 8K/min auf 360 °C erhöht. Für die GC-MS Detektion wurde Elektronenstoßionisation mit 70 eV Ionisationsenergie benutzt. Als Injektortemperatur wurde 250 °C gewählt.

Größenausschlusschromatographie (engl.: *Size Exclusion Chroamtography, SEC*) wurde gemäß DIN 55672-1:2016-03 mit Tetrahydrofuran als Elutionsmittel durchgeführt.

Röntgenkristallstrukturanalyse erfolgte an einem Oxford Diffraction Xcalibur ausgestattet mit einem CCD-Flächendetektor (Model Ruby), einer Cu_{Kα} Quelle und Osmic Spiegeln als Monochromator bei 106 bis 107 K. Das Programm CrysAlis Version 1.171.38.43 (Rigaku 2015) wurde für die Datenaquisition und -reduktion verwendet. SHELXTL Version 6.14 (Bruker AXS, 2003) fand Einsatz für die Strukturlösung.

Die Messung der Hazen-Farbzahl erfolgte spektrophotometrisch nach DIN EN ISO 6271-2:2005-03 mit einem LICO 400-Spektrofotometer der Fa. Lange, DE.

Die Pendeldämpfung nach König wurde in einem klimatisierten Raum bei 23 °C und 50% relativer Luftfeuchte mittel Pendeldämpfungs-Prüfer der Fa. BYK Gardner gemäß DIN ISO 1522 gemessen.

Der Wassergehalt wurde durch Titration nach Karl Fischer als volumetrische Methode nach DIN 53715:1991-05 bestimmt. Der Messbereich des Wassergehaltes lag bei 0,01 bis < 99 Gew.-% und wurde mit einem Titrierautomat Titrando 841, Fa. Methrom gemessen.

Alle chemischen Reaktionen wurden unter einer Stickstoffatmosphäre in vorher im Vakuum bei 150 bis 200 °C getrockneten Glasapparaturen durchgeführt. Die verwendeten Chemikalien wurden, soweit nicht anders erwähnt, von kommerziellen Anbietern beispielsweise der Fa. Aldrich bezogen und, soweit nicht anders erwähnt, ohne weitere Reinigung oder Vorbehandlung eingesetzt.

Setalux DA 665 BA/X: OH-haltiges Acrylat-Polyol, Fa. Nuplex, NL
Desmophen 670 BA OH-haltiges Polyester-Polyol, Fa. Covestro, D
Borchi Gol OL 17: Oberflächenadditiv auf Basis Polyether modifizierten Polysiloxan zur Verlaufverbesserung, Fa. Borchers GmbH, D
Tinuvin 292 HALS-Lichtstabilisator, Fa. BASF SE, D
Tinuvin 1130 HALS-Lichtstabilisator, BASF SE, D
MPA: 1-Methoxy-2-propylacetat, CAS 108-65-6, Lösemittel, Fa. Azelis, D
Solventnaphtha Isomerengemisch, CAS 64742-95-6, Lösemittel, Fa. Azelis, D Diacetonalkohol, CAS 123-42-2, Lösemittel, Fa. Sigma Aldrich, D
Polyisocyanat 1: Eine Mischung aus 90 Teilen Desmodur^{®} ultra N 3300, 0,23 Teilen des Katalysators 1 und 9,77 Teilen n-Butylactat
Polyisocyanat 2: Eine Mischung aus 90 Teilen Desmodur^{®} ultra N 3300, 0,28 Teilen des Katalysators 2 und 9,72 Teilen n-Butylactat
Polyisocyanat 3: Eine Mischung aus 90 Teilen Desmodur^{®} ultra N 3300, 0,36 Teilen des Katalysators 3 und 9,64 Teilen n-Butylactat
Polyisocyanat 4: Eine Mischung aus 90 Teilen Desmodur^{®} ultra N 3300, 0,4 Teilen des Katalysators 4 und 9,6 Teilen n-Butylactat

Desmodur^{®} ultra N 3300: Desmodur ultra N ist ein HDI-basierendes Polyisocyanat (Trimertyp) der Fa. Covestro, mit 21,8 +/- 0,3 % NCO-Gehalt und 3000 +/- 750 mPas Viskosität bei 23 °C.

### Synthese der Liganden A und B

### 1. Ligand A

Zur Herstellung von Ligand A wurde in einem Young-Gefäß Methylamin (40%ig in MeOH, 3,15 g, 3,50 mL, 40,57 mmol, 1,0 Äq.) vorgelegt und Trifluormethyloxiran (10,00 g, 7,65 mL, 89,24 mmol, 2,2 Äq.) unter Magnetrühren zugegeben. Anschließend wurden ca. 20 mg Wasser zugesetzt und mittels eines externen Ölbades auf 65 bis 70 °C Ölbadtemperatur geheizt. Nach 72 h wurde mittels Vakuumdestillation aufgearbeitet.

kp 95 °C (0,3 mbar), 7,67 g, 30,06 mmol, 74% Ausbeute auf Methylamin bezogen, viskose Flüssigkeit.

### 2. Ligand B

Zur Herstellung von Ligand B wurde in einem Zweihalskolben n-Butylamin (2,97 g, 4,02 mL, 40,61 mmol, 1,0 Äq.) vorgelegt und Trifluormethyloxiran (10,00 g, 7,65 mL, 89,25 mmol, 2,2 Äq.) unter Rühren langsam zugetropft. Anschließend wurden ca. 20 mg Wasser zugesetzt. Die eintretende exotherme Reaktion lieferte einige sehr kleine Kristalle. Anschließend wurde der Rühr- und Heizvorgang bei 60 bis 65 °C Ölbadtemperatur begonnen. Da nach 24 h keine Veränderung der Kristallausbeute eintrat, wurde zusätzliches Trifluormethyloxiran (5,00 g, 3,83 mL, 44,62 mmol, 1,1 Äq.) und wasserfreies MeOH (5 mL) zugegeben und die Reaktion für weitere 72 h unter den gleichen Bedingungen fortgesetzt. Nach Beenden der Reaktion wurde die Reaktionsmischung mittels Vakuumdestillation aufgearbeitet.

kp 90 °C (0,03 mbar), 9,88 g, 33,22 mmol, 83% Ausbeute auf n-Butylamin bezogen, viskose Flüssigkeit.

### Allgemeine Vorschrift für die Synthese der erfindungsgemäß verwendeten Katalysatoren 3 und 4

In einem Schlenkkolben wurde Zinntetra-*tert*.-butoxid (1,06 g, 2,58 mmol, 1,0 Äq.) mit in 10 ml Toluol gelösten Liganden A (1,32 g, 5,16 mmol, 2,0 Äq.) versetzt und unter Magnetrühren zum Rückfluss erhitzt. Die noch heiße Reaktionslösung wurde inert filtriert und das Filtrat einige Tage im Kühlschrank gelagert. Die sich dabei abscheidenden Kristalle wurden mit wenig kaltem Toluol gewaschen, die überstehende Lösung mittels Spritze entfernt und die restlichen Lösungsmittelreste im Vakuum abgezogen. Katalysator 3 wurde als kristalliner Feststoff erhalten (1,11 g, 69% Ausbeute).

Katalysator 4 resultierte nach analogem Procedere in 35%iger Ausbeute ebenfalls als kristalliner Feststoff.

Die Identität sämtlicher neuer Verbindungen (Liganden A und B, Katalysatoren 3 und 4) folgte aus den Ergebnissen von Multikern-NMR-spektroskopischen Untersuchungen, den Resultaten der Elementaranalyse sowie zusätzlich bei den Katalysatoren 3 und 4 aus den Ergebnissen der Röntgenkristallstrukturanalyse.

Die erfindungsgemäßen Katalysatoren 3 und 4 und die in den Vergleichsversuchen eingesetzten Katalysatoren 1 und 2 (erhältlich gemäß der WO 2011/051247 A1) wurden jeweils in Butylacetat gelöst und diese Lösungen zu Desmodur^{®} Ultra N 3300 gegeben, wobei die Mengen so aufeinander abgestimmt wurden, dass einheitlich 90% Desmodur^{®} Ultra N 3300 enthaltende Härter resultierten. Die Katalysatormenge wurde zur besseren Vergleichbarkeit der Aktivität der erfindungsgemäßen Katalysatoren 3 und 4 und der Katalysatoren 1 und 2 aus den Vergleichsbeispielen als mg Sn je kg Lösemittel-freiem Polyisocyanathärter Desmodur^{®} Ultra N 3300 angegeben.

**Tabelle 1 Übersicht zu den verwendeten Katalysatoren**

| **Katalysator** | **IUPAC-Name** | **Summenformel** | **Molgewicht [g/mol]** | **Sn-Gehalt [Gew.-%]** |
|---|---|---|---|---|
| **Kat. 1 (Vergleich)** | 4-n-Octyl-1,7-dioxa-4-aza-8,8-dichloro-8-stannaocan | C₁₂H₂₅Cl₂NO₂Sn | 404,9 | 29,3 |
| **Kat. 2 (Vergleich)** | 4,12-Di-n-butyl-2,6,10,14-tetramethyl-1,7,9,15-tetraoxa-4,12-diaza-8-stannaspiro[7.7]pentadecan | C₂₀H₄₂Cl₂N₂O₄Sn | 493,3 | 24,1 |
| **Kat. 3 (erfind.-gemäß)** | 4,12-Dimethyl-2,6,10,14-tetrakis(trifluormethyl)-1,7,9,15-tetraoxa-4,12-diaza-8-stannaspiro[7.7]pentadecan | C₁₄H₁₈F₁₂N₂O₄Sn | 625,0 | 19,0 |
| **Kat. 4 (erfind.-gemäß)** | 4,12-Di-n-butyl-2,6,10,14-tetrakis(trifluormethyl)-1,7,9,15-tetraoxa-4,12-diaza-8-stannaspiro[7.7]pentadecan | C₂₀H₃₀F₁₂N₂O₄Sn | 709,1 | 16,7 |

### Anwendungstests in Klarlackformulierungen

Um einen Einfluss der erfindungsgemäßen Katalysatoren 3 und 4 und der Vergleichskatalysatoren 1 und 2 auf die Topfzeit nachzuweisen, wurden jeweils lösemittelhaltige Klarlackformulierungen auf Basis eines OH-haltigen Acrylat-Polyols und eines OH-haltigen Polyester-Polyols hergestellt. Hierzu wurden die Komponenten A und B gemäß Tabelle 1 nacheinander eingewogen und vermischt.

**Tabelle 1: Klarlackformulierungen (Zinngehalt jeweils 750 ppm, jeweils bezogen auf Komponente B).**

| | Klarlackformulierung | | | |
|---|---|---|---|---|
| | 1 | 2 | 3 | 4 |
| | Katalysator | | | |
| | 1 | 2 | 3 | 4 |
| **Komponente A** | | | | |
| Desmophen 670 BA | 18,8 | 18,8 | 18,8 | 18,8 |
| Setalux DA 665 BA/X | 130,8 | 130,8 | 130,8 | 130,8 |
| Borchi GOL OL 17 10%ig in Butylacetat | 1,6 | 1,6 | 1,6 | 1,6 |
| Tinuvin 292 10%ig in MPA | 16,2 | 16,2 | 16,2 | 16,2 |
| Tinuvin 1130 10%ig in MPA | 8,1 | 8,1 | 8,1 | 8,1 |
| MPA | 31,6 | 31,6 | 31,6 | 31,6 |
| Solventnaphtha | 31,6 | 31,6 | 31,6 | 31,6 |
| Diacetonalkohol | 15,8 | 15,8 | 15,8 | 15,8 |
| Summe (Komponente A) | 254,5 | 254,5 | 254,5 | 254,5 |

| **Komponente B** | | | | |
|---|---|---|---|---|
| Polyisocyanat 1 | 68,2 | - | - | - |
| Polyisocyanat 2 | - | 68,4 | - | - |
| Polyisocyanat 3 | - | - | 68,0 | - |
| Polyisocyanat 4 | - | - | - | 68,0 |
| Summe (gesamt) | 322,7 | 322,9 | 322,5 | 322,5 |

| | | | | |
|---|---|---|---|---|
| Alle Angaben in g Wassergehalt der Komponente A: 1230 ppm | | | | |

**Tabelle 2: Klarlackformulierungen (Zinngehalt jeweils bezogen auf Komponente B).**

| | Klarlackformulierung | | | |
|---|---|---|---|---|
| | 1 | 2 | 5 | 6 |
| | Katalysator | | | |
| | 1 | 2 | 3 | 4 |
| Zinngehalt im Festharz [ppm] | 755 | 760 | 450 | 525 |

| **Komponente A** | | | | |
|---|---|---|---|---|
| Desmophen 670 BA; (Lff) | 18,8 | 18,8 | 18,8 | 18,8 |
| Setalux DA 665 BA/X; (Lff) | 130,8 | 130,8 | 130,8 | 130,8 |
| Borchi GOL OL 17 10%ig in Butylacetat | 1,6 | 1,6 | 1,6 | 1,6 |
| Tinuvin 292 10%ig in MPA | 16,2 | 16,2 | 16,2 | 16,2 |
| Tinuvin 1130 10%ig in MPA | 8,1 | 8,1 | 8,1 | 8,1 |
| MPA | 31,6 | 31,6 | 31,6 | 31,6 |
| Solventnaphtha | 31,6 | 31,6 | 31,6 | 31,6 |
| Diacetonalkohol | 15,8 | 15,8 | 15,8 | 15,8 |
| Summe (Komponente A) | 254,5 | 254,5 | 254,5 | 254,5 |

| **Komponente B** | | | | |
|---|---|---|---|---|
| Polyisocyanat 1 | 68,2 | - | - | - |
| Polyisocyanat 2 | - | 68,4 | - | - |
| Polyisocyanat 3 | - | - | 40,6 | - |
| Polyisocyanat 4 | - | - | - | 47,5 |
| Desmodur ultra N 3390 | - | - | 27,1 | 20,4 |
| Summe (gesamt) | 322,7 | 322,9 | 322,2 | 322,4 |

| | | | | |
|---|---|---|---|---|
| Alle Angaben in g Wassergehalt der Komponente A: 1230 ppm | | | | |

### Topfzeitbestimmung

Zur Vernetzung der Zwei-Komponenten-Systeme wurden die Komponenten A und B jeweils miteinander durch Rühren mit dem Laborrührer (60 sec. bei 1000 U/min.) homogen vermischt. Dann wurde das vermischte System 60 sec. ruhen gelassen um danach die Anfangsviskosität bei 23 °C zu bestimmen. Die Messung wurde beendet, sobald die Viskosität 300 mPas überschritt, spätestens aber nach 180 Minuten. Im Rahmen der Erfindung ist die Topfzeit als die Zeit definiert, in der das Lacksystem seine Viskosität verdoppelt hat.

**Tabelle 3: Viskositätsmessungen [mPas] bei 23 °C und konstanter Scherrate (235 s⁻¹)**

| | Klarlackformulierung | | | | | |
|---|---|---|---|---|---|---|
| | 1 | 2 | 3 | 4 | 5 | 6 |
| Zinngehalt im Festharz [ppm] | 755 | 760 | 755 | 760 | 450 | 525 |
| Anfangsviskosität | 86 | 92 | 94 | 95 | 93 | 95 |
| nach 15 min. | 105 | 113 | 99 | 100 | 106 | 104 |
| nach 30 min. | 111 | 125 | 109 | 109 | 115 | 113 |
| nach 45 min. | 120 | 135 | 119 | 119 | 124 | 121 |
| nach 60 min. | 135 | 145 | 133 | 130 | 134 | 130 |
| nach 75 min. | 149 | 159 | 153 | 143 | 146 | 140 |
| nach 90 min. | 168 | 175 | 189 | 169 | 159 | 151 |
| nach 105 min. | 172 | 191 | 255 | 203 | 174 | 164 |
| nach 120 min. | 195 | 206 | >300 | 255 | 192 | 179 |
| nach 135 min. | 210 | 225 | nm | >300 | 212 | 198 |
| nach 150 min. | 220 | 247 | nm | nm | 235 | 220 |
| nach 165 min. | 235 | 276 | nm | nm | 259 | 247 |
| nach 180 min. | 284 | 300 | nm | nm | 287 | 281 |

| | | | | | | |
|---|---|---|---|---|---|---|
| Alle Angaben, falls nicht anders angegeben, in mPas. nm bedeutet nicht messbar | | | | | | |

Die Versuche zeigen, dass die erfindungsgemäßen Klarlackformulierungen 3 und 4 bei gegenüber den Vergleichsformulierungen 1 und 2 gleichem Zinngehalt signifikant schneller reagieren. Andererseits sind bei signifikant reduziertem Zinngehalt in den erfindungsgemäßen Klarlackformulierungen 5 und 6 vergleichbare Reaktivitäten gegenüber den Vergleichsformulierungen 1 und 2 mit höherem Zinngehalt zu beobachten.

### Härtebestimmung mittels Pendeldämpfung nach König

Zur Härtebestimmung wurden die für die Topfzeitbestimmung hergestellten Klarlackformulierungen nach der Vernetzung und anschließender Ruhezeit (60 Sekunden) mittels 100 µm-Spiralrakel auf jeweils zwei Glasplatten appliziert. Nach 10 Minuten Ablüftzeit bei Zimmertemperatur wurden beide beschichtete Glasplatten jeweils 30 min. bei 80 °C in einem Umluft-Trockenschrank getrocknet. Eine Platte wurde anschließend in einem Klimaraum bei 23 °C und 50% relativer Luftfeuchte gelagert. Bei dieser im Klimaraum gelagerten Glasplatte wurde nach 1 Stunde, 4 Stunden und 24 Stunden im Klimaraum die Pendeldämpfung nach König bestimmt. Die andere Glasplatte wurde weitere 16 Stunden bei 60 °C gealtert und anschließend 1 Stunde im Klimaraum gelagert. Danach wurde die Pendeldämpfung nach bestimmt.

**Tabelle 5: Pendeldämpfung nach König [sec]**

| | Klarlackformulierung | | | | | |
|---|---|---|---|---|---|---|
| | 1 | 2 | 3 | 4 | 5 | 6 |
| Zinngehalt [ppm] | 755 | 760 | 750 | 750 | 450 | 525 |
| Trocknung : 30 min. 80 °C nach 1 Stunden Klimaraum | 70 | 76 | 115 | 102 | 99 | 105 |
| Trocknung : 30 min. 80 °C nach 4 Stunden Klimaraum | 78 | 86 | 122 | 112 | 103 | 107 |
| Trocknung : 30 min. 80 °C nach 24 Stunden Klimaraum | 128 | 132 | 150 | 146 | 142 | 150 |
| Trocknung : 30 min. 80 °C nach 16 Stunden 60°C und 1 Stunde Klimaraum | 176 | 191 | 190 | 191 | 190 | 193 |

| | | | | | | |
|---|---|---|---|---|---|---|
| Alle Angaben, falls nicht anders angegeben, in sec. | | | | | | |

Es ist zu erkennen, dass die Härteentwicklung und insbesondere die erreichte Endhärte in allen Fällen vergleichbar ist, wobei die erfindungsgemäßen Systeme 3, 4 , 5 und 6 generell bezüglich der Anfangshärteentwicklung besser abschneiden als die Vergleichsformulierungen 1 und 2.

## Patentansprüche

1. Katalysator der allgemeinen Formel (I) 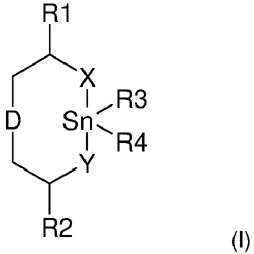 worin R1, R2, R3, R4, D, X und Y die folgenden Bedeutungen haben:
R1, R2 unabhängig voneinander gesättigte oder ungesättigte, lineare oder verzweigte, aliphatische, cycloaliphatische, oder gegebenenfalls substituierte, oder araliphatische, Reste mit 1 bis 20 Kohlenstoffatomen, die gegebenenfalls Heteroatome aus der Reihe Sauerstoff, Schwefel und/oder Stickstoff enthalten können, und von denen mindestens einer in beta-Stellung zu X bzw. Y mindestens ein Fluoratom aufweisen,
R3, R4 unabhängig voneinander Gruppe ausgewählt aus -OH, -SH,-OR5, -Hal, -OC(=O)R6, -SR7, -OC(=S)R8, -OS(=O)₂OR9,-OS(=O)₂R10 oder -NR11 R12,
wobei R5 bis R12 unabhängig voneinander für gesättigte oder ungesättigte, lineare oder verzweigte, aliphatische oder cycloaliphatische oder gegebenenfalls substituierte, aromatische oder araliphatische Reste mit 1 bis 20 Kohlenstoffatomen, die gegebenenfalls Heteroatome aus der Reihe Sauerstoff, Schwefel, Stickstoff enthalten können, oder für Wasserstoff stehen,
oder
R3 und R4 bilden zusammen eine Gruppe der allgemeinen Formel (II)
-X-CH(R1)-CH₂-D-CH₂-CH(R2)-Y- (II),
in der R1, R2, D, X und Y unabhängig voneinander die hier genannten Bedeutungen haben,
X, Y unabhängig voneinander Gruppe ausgewählt aus -O-, -S-, -OC(=O), -OC(=S)-, -SC(=O)-, -SC(=S)-, -OS(=O)₂O-, -OS(=O)₂- oder -N(R13)-,
wobei R13 für einen gesättigten oder ungesättigten, linearen oder verzweigten, aliphatischen oder cycloaliphatischen oder einen gegebenenfalls substituierten, aromatischen oder araliphatischen Rest mit 1 bis 20 Kohlenstoffatomen, der gegebenenfalls Heteroatome aus der Reihe Sauerstoff, Schwefel, Stickstoff enthalten kann, oder für Wasserstoff steht,
D Gruppe ausgewählt aus -O-, -S- oder -N(R14)-,
wobei R14 für einen gesättigten oder ungesättigten, linearen oder verzweigten, aliphatischen oder cycloaliphatischen oder einen gegebenenfalls substituierten, aromatischen oder araliphatischen Rest mit 1 bis 20 Kohlenstoffatomen, der gegebenenfalls Heteroatome aus der Reihe Sauerstoff, Schwefel, Stickstoff enthalten kann, oder für Wasserstoff steht
oder R14 steht für einen Rest der allgemeinen Formel (III) 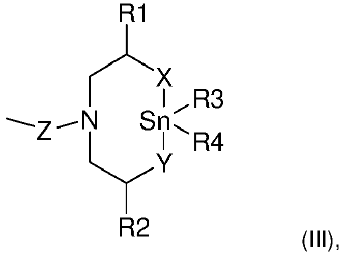 wobei Z eine Einfachbindung oder eine gesättigte oder ungesättigte, bevorzugt gesättigte, Alkylen-Gruppe mit 1 bis 12 Kohlenstoffatomen oder eine Arylen-Gruppe mit 6 bis 24 Kohlenstoffatomen, beispielsweise Phenylen oder Naphtylen, bedeutet.

2. Katalysator gemäß Anspruch 1, **dadurch gekennzeichnet, dass** R3 und R4 eine Gruppe der allgemeinen Formel (II)
-X-CH(R1)-CH₂-D-CH₂-CH(R2)-Y- (II),
bilden, in der R1, R2, D, X und Y jeweils die gleichen Bedeutungen haben wie in der allgemeinen Formel (I).

3. Katalysator gemäß Anspruch 1 oder 2, **dadurch gekennzeichnet, dass** R1 und R2 unabhängig voneinander ausgewählt sind aus gesättigten, linearen oder verzweigten, aliphatischen Reste mit 1 bis 20, bevorzugt 1 bis 12, besonders bevorzugt 1 bis 6, Kohlenstoffatomen, von denen mindestens einer, bevorzugt beide, in beta-Stellung zu X bzw. Y mindestens ein Fluoratom, bevorzugt zwei Fluoratome, aufweisen.

4. Katalysator gemäß einem der Ansprüche 1 bis 3, **dadurch gekennzeichnet, dass** X und Y jeweils -O- bedeuten.

5. Katalysator gemäß einem der Ansprüche 1 bis 4, **dadurch gekennzeichnet, dass** D -N(R14)- bedeutet, wobei R14 für einen gesättigten, linearen oder verzweigten, aliphatischen oder cycloaliphatischen Rest mit 1 bis 20, bevorzugt 1 bis 12, besonders bevorzugt 1 bis 6, Kohlenstoffatomen oder für Wasserstoff steht.

6. Verfahren zur Herstellung eines Katalysators der allgemeinen Formel (I), umfassend mindestens die Schritte
(A) Bereitstellen mindestens einer Verbindung der allgemeinen Formel (VI)
HY-CHR2-CH₂-D-CH₂-CHR1-XH (VI)
wobei R1, R2, D, X und Y die folgenden Bedeutungen haben
R1, R2 unabhängig voneinander gesättigte oder ungesättigte, lineare oder verzweigte, aliphatische, cycloaliphatische, oder gegebenenfalls substituierte, oder araliphatische, Reste mit 1 bis 20 Kohlenstoffatomen, die gegebenenfalls Heteroatome aus der Reihe Sauerstoff, Schwefel und/oder Stickstoff enthalten können, und von denen mindestens einer in beta-Stellung zu X bzw. Y mindestens ein Fluoratom aufweisen,
X, Y unabhängig voneinander Gruppe ausgewählt aus -O-, -S-,-OC(=O), -OC(=S)-, -SC(=O)-, -SC(=S)-, -OS(=O)₂O-, -OS(=O)₂- oder -N(R13)-,
wobei R13 für einen gesättigten oder ungesättigten, linearen oder verzweigten, aliphatischen oder cycloaliphatischen oder einen gegebenenfalls substituierten, aromatischen oder araliphatischen Rest mit 1 bis 20 Kohlenstoffatomen, der gegebenenfalls Heteroatome aus der Reihe Sauerstoff, Schwefel, Stickstoff enthalten kann, oder für Wasserstoff steht,
D Gruppe ausgewählt aus -O-, -S- oder -N(R14)-,
wobei R14 für einen gesättigten oder ungesättigten, linearen oder verzweigten, aliphatischen oder cycloaliphatischen oder einen gegebenenfalls substituierten, aromatischen oder araliphatischen Rest mit 1 bis 20 Kohlenstoffatomen, der gegebenenfalls Heteroatome aus der Reihe Sauerstoff, Schwefel, Stickstoff enthalten kann, oder für Wasserstoff steht.
(B) Inkontaktbringen der mindestens einen Verbindung der allgemeinen Formel (IV) mit mindestens einer Zinn-enthaltenden Verbindung, um den Katalysator der allgemeinen Formel (I) zu erhalten.

7. Polyisocyanat-Polyadditionsprodukt erhältlich aus
(a) mindestens einem aliphatischen, cycloaliphatischen, araliphatischen und/oder aromatischen Polyisocyanat,
(b) mindestens einer NCO-reaktiven Verbindung,
(c) mindestens einem Katalysator gemäß einem der Ansprüche 1 bis 5,
(d) gegebenenfalls weiteren von (c) verschiedenen Katalysatoren und/oder Aktivatoren,
(e) gegebenenfalls Füllstoffen, Pigmenten, Additiven, Verdickern, Entschäumern und/oder anderen Hilfs- und Zusatzstoffen.

8. Polyadditionsprodukt gemäß Anspruch 7, **dadurch gekennzeichnet, dass** das Verhältnis des Gewichts des Zinns aus Komponente (c) und des Gewichts der Komponente (a) weniger als 1000 ppm beträgt, wenn Komponente (a) ein aliphatisches Polyisocyanat ist und weniger als 50 ppm beträgt, wenn Komponente (a) ein aromatisches Polyisocyanat ist.

9. Verfahren zur Herstellung eines Polyisocyanat-Polyadditionsproduktes gemäß Anspruch 7 oder 8, wobei
(a) mindestens ein aliphatisches, cycloaliphatisches, araliphatisches und/oder aromatisches Polyisocyanat mit
(b) mindestens einer NCO-reaktiven Verbindung in Gegenwart
(c) mindestens eines Katalysators gemäß einem der Ansprüche 1 bis 5,
(d) gegebenenfalls weiteren von (c) verschiedenen Katalysatoren und/oder Aktivatoren und
(e) gegebenenfalls Füllstoffen, Pigmenten, Additiven, Verdickern, Entschäumern und/oder anderen Hilfs- und Zusatzstoffen,
umgesetzt wird.

10. Beschichtungsmittel enthaltend mindestens ein Polyisocyanat-Polyadditionsprodukt gemäß Anspruch 7 oder 8.

11. Beschichtung erhältlich unter Verwendung eines Beschichtungsmittels gemäß Anspruch 10.

12. Substrat beschichtet mit einer Beschichtung gemäß Anspruch 11.
